# EUROPEAN PATENT SPECIFICATION

(11) **EP 2 752 642 B1**
(45) Date of publication and mention of the grant of the patent: **06.11.2019**
(21) Application number: 12827237.4
(22) Date of filing: 27.07.2012
(51) Int. Cl.: G07C 5/00, G01C 21/00

(54) **TACHOGRAPH**
FAHRTENSCHREIBER
TACHYGRAPHE

(30) Priority: 02.09.2011 RU 2011136402
(43) Date of publication of application: 09.07.2014
(73) Proprietor: The Federal State Budgetary Institution «Federal Agency for Legal Protection of Military, Special and Dual Use Intellectual Activity Results», Moscow 123995 (RU); Kalinin, Boris Pavlovich, Rostov-na-Donu 344091 (RU)
(72) Inventor: KALININ, Boris Pavlovich, Rostov-na-Donu 344091 (RU)
(74) Representative: Glawe, Delfs, Moll
(86) International application number: PCT/RU2012/000612
(87) International publication number: WO 2013/032364

(56) References cited:
- CN-Y- 200 979 708
- DE-A1-102009 042 958
- GB-A- 2 471 727
- RU-C1- 2 036 432
- RU-C1- 2 221 277
- US-A1- 2010 191 413
- US-A1- 2010 191 413
- US-A1- 2011 205 040

## Description

The present invention relates to road traffic safety systems and is intended for controlling movement parameters and monitoring a vehicle.

A device "Inertial Satellite Module and a Complex Inertial Satellite System for Navigation, Communications, Situation Coverage, Control and Monitoring" is known (RU 2036432 C1, IPC G01 C21/24, G01 C23/00, publ. 27.05.1995) /1/. Monitoring and safety are provided by this device due to the fact that an inertial satellite module determines nine integral parameters for each error in three coordinates and three projections of linear speed. Deployment of several inertial satellite modules on the object housing enables to achieve a possibility of determining linear and angular deformations in linear deformation determination units and angular deformation determination units. Because of its complex technical solution, this device possesses excess information enabling to solve complex application and even scientific tasks owing to using a great number of measuring instruments, which raises its cost significantly. The device is bulky and may not be used in compact devices, such as transport vehicles.

A device "System for registering and restoring vehicle movement parameters" is known (RU 2221277 C1 IPC⁷ G07C5/08, B60R27/00, publ. 10.01.2004) /2/. A vehicle is provided with a ground speed meter and an acceleration longitudinal component meter, both of them being connected to an analog-to-digital converter. Furthermore, the analog-to-digital converter is connected to an angular speed meter and an acceleration transverse component meter. The outputs of the analog-to-digital converter are connected to a memory register and to a solving device. Also provided are: a critical parameter indicating unit, an instruction forming unit and, connected in series, a data format conversion unit, a nonvolatile memory unit, a data reading unit and a data wireless transmission unit. This device enables to use digital recorders and, consequently, digital methods for processing information that are associated with expanded volumes of recorded and, consequently, processed information. The device solves very specific tasks in short periods of time during insured accidents only.

A device "Tachograph System for a Vehicle and a Sensor Arrangement for Tachograph" is known (DE 102009042958 (A1) G07C 5/08, publ. 04.08.2011) /3/. This device is proposed for improving operation of a speed sensor by introducing an additional acoustic sensor into its for improving operation of a speed sensor by introducing an additional acoustic sensor into its measuring circuit. The proposed arrangement of sensors in a sensing head ensures close position of an additional sensor, being an acoustic sensor, e.g., a microphone, to a speed sensor that is in the sensing head. They are arranged as close as possible to each other in order to have similar operation conditions. The sensing head and, consequently, the two sensors are located nearer to a pinion having a plurality of teeth and arranged on the vehicle transmission. The speed sensor reacts to protruding parts being the pinion teeth causing changes in a magnetic field, thus forming a signal having a rectangular pulse shape. This pulse is a measure for calculating a number of revolutions of a transmission gear and, thus, for determining speed and traveled distance. The device works as follows. The microphone detects sounds from the transmission that are expressed in a frequency spectrum. The sensors are each connected to their respective formers and operate concordantly, in tandem. The operating circuit, as a common tachograph circuit, comprises a system for encrypting information coming from the speed sensor. This device does not contribute to simplification of tachograph operation, since a cable for communicating with a tachograph is added that provides information from the additional sensor. Assembly of the sensor head that should comprise two sensors complicates its installation and results in extra cost of the whole device.

Furthermore, another prior art devices are known from GB 2 471 727 A, which discloses a tracking tachograph comprising a microprocessor arithmetic device, a memory device for storing information, a power supply, a display for visualizing operative information, a push-button panel for controlling work modes, an identification chip, a GPS satellite navigation receiver, a GPS antenna, a connector GPS antenna, a GSM/GPRS modem, a SIM-card, and a GSM antenna, and a GSM connector, and an accelerometer, which is arranged on a printed-circuit board within the tracking tachograph housing, the said microprocessor receives navigation information and time contained in the data-exchange protocol used by the GPS satellite navigation system, and CN 200 979 708 Y.

Another prior art device is "Speed Detection Method for a Tachograph System" (US 2010191413 A1, G01P21/02, G01P3/50, G01P3/66, publ. 15.05.2010) /4/, which is taken as the prototype. This invention relates to a method for determining and storing speed, traveled distance and information registered by a tachograph.

The tachograph comprises: a microprocessor arithmetic unit for processing information coming from the sensors, a power supply, a display for visualizing operating information, a speed sensor arranged on the transmission, a receiver for the Global Positioning System (a GPS-receiver), a push-button panel for controlling operation modes, a wheel-mounted sensor of the anti-lock braking system for detecting a number of revolution of the wheel, which enables to determine a vehicle speed, a printing device (printer) and two I/O devices for cards having an electronic chip for storing operating information accumulated during vehicle movement and identifying an operating driver.

In order to determine speed, the microprocessor arithmetic device processes signals from at least two independent sensors, compares received data and stores an error message in a case where signals differ from each other significantly. In the proposed embodiment signals from at least three independent sensors are compared to each other by the microprocessor arithmetic device and are checked for their match to each other in order to exclude any signals which values differ from those of the other signals significantly. Vehicle speed determination should be made only by using one or more signals that differ from each other within certain limits.

Some disadvantages of the proposed invention taken as the prototype are:
1. Insufficient accuracy of determining the main parameters of the tachograph (speed and distance traveled) due to the fact that the time source of a digital tachograph is unstable. So, according to the norms stated in Addendum 1B to the Annex of the Inland Transport Committee of the European Economic Commission (ECTP ECE/TRANS/SC.1/2006/2/Add.1) 151, the time spread of a digital tachograph may be up to ±2 minutes per day, but the same documents refer to and recommend necessary correction in a case where run-down time is up to 20 minutes per day.
2. Since a speed sensor is arranged on the transmission and requires a cable to be connected to a tachograph, it becomes the object of unlawful actions of dishonest drivers, allowing them to act in some or another way on received data for the purpose of falsifying it. In order to prevent possible manipulations, it is necessary to additionally introduce cryptographic protection for the tachograph, which requires use of special, so-called encrypted, speed sensors and installation of costly cryptographic software. In addition, installation of an encrypted speed sensor requires calibration of the tachograph during which the K and L coefficients should be determined. The K coefficient characterizes a number of wheel revolutions per one kilometer of travel, the L coefficient characterizes a length of the wheel rim; and during vehicle movement this allows to obtain a traveled distance by multiplying these coefficients and to obtain speed on the basis of travel time. These operations lead to an increase in the cost of the product and in labor input relating to maintenance work on installing an encrypted sensor.
3. The tachograph is provided only with a receiver for signals of the GPS radio navigation system (Global Positioning System);
4. There is no possibility of operatively monitoring a vehicle location.

The objective of the present invention is to improve operation accuracy and, consequently, reliability of parameters to be determined as well as to expand the functionality of a tracking tachograph. The operation accuracy may be achieved by synchronization with the time used by the satellite navigation systems GLONASS / GPS / GALILEO, since the data exchange protocol comprises both navigation information on ground speed, latitude, longitude, and the UTC time reference. As the standard UTC time for the GLONASS satellite system the frequency standard is used which daily instability is 5x10⁻¹³. (The Global Navigation Satellite System GLONASS. The Interface Control Document ICD GLONASS. Version 5.0, 2002) /6/. For the purpose of expanding the tracking tachograph functionality it is proposed to use a GSM/GPRS module (modem) that ensures operation of the device in the Global System for Mobile Communications (GSM) with the use of the General Packet Radio Service (GPRS). This device enables to organize monitoring of a vehicle by operatively informing a control center about a location of the given vehicle.

The invention is defined in the independent claim. The embodiments described below are examples for better understanding the invention. Embodiments which do not fall within the scope of the claims do not describe part of the present invention.

To ensure continuity of inputs from different, independent of each other sources, the tracking tachograph is additionally provided with an accelerometer that will send information to the microprocessor in the real-time mode, and this information will be converted by the microprocessor and compared to information received from a satellite navigation receiver, supplementing it when necessary.

These technical effect is achieved due to the fact that the tracking tachograph, which comprises a display, a push-button panel, a printing device, two slots for driver's card, an input voltage connector, a power supply, a microprocessor and a memory device, a wheel-mounted sensor of an anti-lock brake system, a GLONASS / GPS / GALILEO satellite receiver, a GLONASS/GPS/GALILEO antenna, a connector for connecting the said GLONASS/GPS/GALILEO antenna, and a 3.3 V voltage stabilizer, according to the invention is additionally provided with an I/O port for a standard UART interface for data exchanges, a GSM/GPRS modem, a SIM-card as well as a GSM connector and a GSM antenna; and an accelerometer, which is arranged on a printed-circuit board in the housing of the tracking tachograph, is introduced as an additional information source, thus precluding any manipulations with the tachograph. The output of the input voltage connector is connected to the input of the tracking tachograph power supply which power output is connected to the power inputs of the 3.3 V stabilizer, those of the display, the push-button panel, the printing device, the slots 1 and 2 for a driver's card, the accelerometer, the GSM/GPRS modem, the memory device, the microprocessor and the wheel-mounted sensor of the anti-lock brake system. The microprocessor is coupled with the accelerometer as well as connected to the inputs of the display, the push-button panel, the printing device, the slots 1 and 2 for a driver's card, to the I/O port for a standard UART interface connected to the GSM /GPRS modem and, via it and via the GSM connector, with the GSM antenna, with the second I/O port of a standard UART interface on the GLONASS/GPS/GALILEO satellite navigation receiver and with the wheel-mounted sensor of the anti-lock brake system. The power output of the 3.3 V stabilizer is connected to the power input of the GLONASS/GPS/GALILEO satellite navigation receiver, and, via the connector for the GLONASS/GPS/GALILEO antenna, supplies power to the GLONASS/GPS/GALILEO antenna.

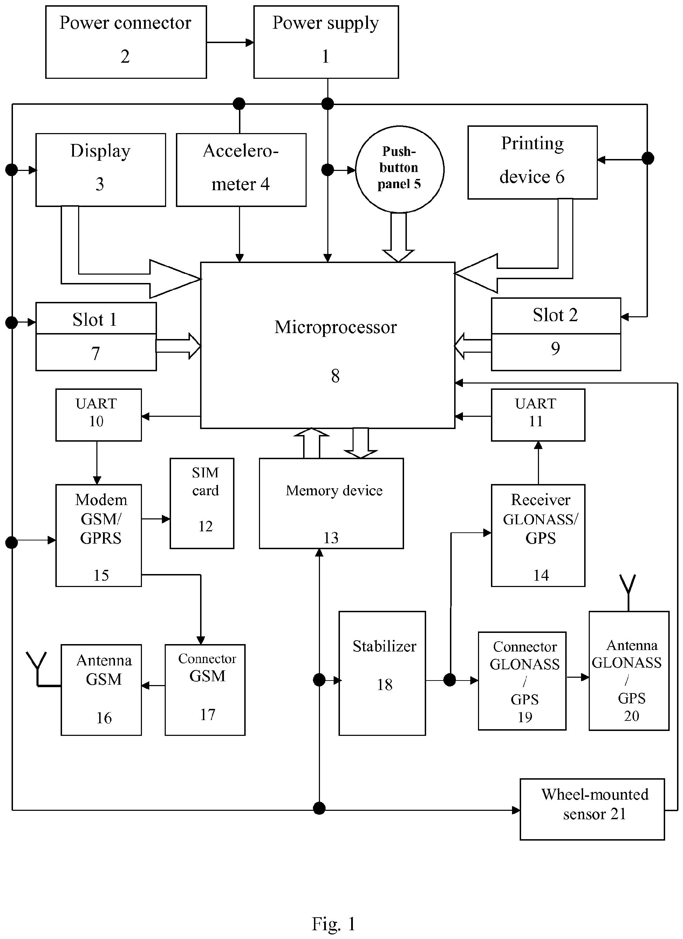

The drawing shows the functional block diagram of the tracking tachograph.

The tracking tachograph comprises the power supply 1 connected by the power input to the output of the power connector 2 and by the output to the power input of the microprocessor 8 that is connected to the display 3, the accelerometer 4, the push-button-panel 5, the printing device 6, the first slot 7 and the second slot 9 for a driver's card, the memory device 13 and to the wheel-mounted sensor of the anti-lock brake system 21. The microprocessor 8 is connected to the I/O port of the standard UART interface 10 of the GSM/GPRS modem 15 that is connected, via the GSM connector 17, to the GSM antenna 16, and the GSM/GPRS modem 15 is connected to the SIM-card 12 that is required for authentication of the tachograph in a GSM network. The microprocessor 8 is connected to the I/O port of the standard UART interface 11 of the satellite navigation receiver 14 that is connected, via the GLONASS/GPS/GALILEO connector 19 to the GLONASS/GPS/GALILEO antenna 20. The power output of the stabilizer 1 is loaded on the power inputs of the devices 3, 4, 5, 6, 7, 9, 13, 15, 18, and 21. The voltage stabilizer 18 supplies, via the GLONASS / GPS / GALILEO connector 19, power to the GLONASS/GPS/GALILEO antenna 20 that extracts signals from visible satellites of the GLONASS/GPS/GALILEO satellite group and transmits them to the GLONASS/GPS/GALILEO receiver 14. The GLONASS / GPS / GALILEO receiver 14 calculates, according to the standard NMEA protocol, the geographic coordinates of the object and transmits information on location, speed and time via the I/O port of the standard UART interface 11 to the microprocessor 8 that accumulates this information and performs synchronization with the UTC time. Information from the accelerometer 4 is transmitted to the microprocessor 8 where it is converted and accumulated as a distance traveled and speed, in accordance with the ECTP norms, once a second. The microprocessor 8 accumulates information from all sources, analyzes it and excludes a signal having a maximum deviation. After processing by the microprocessor 8 a navigation signal is fed via the I/O port of the standard UART interface 10 to the GSM/GPRS modem 15 and then via the GSM connector 17 is fed to the GSM antenna 16. The GSM antenna 16 transmits signals to a GSM network, the GSM network operator being determined by the SIM-card 12.

During communication blackout the microprocessor 8 causes recording of any received information into the memory device 13 with timestamps that are read and transmitted by the microprocessor 8 to the GSM/GPRS modem 15 after communication is restored. The tracking tachograph operation starts after inserting a driver's card into the first slot 7 or the second slot 9 (depending on a driver starting operation) and is confirmed by a movement signal from the wheel-mounted sensor of the anti-lock brake system 21; the microprocessor 8 receives this information and starts the software activating the tracking tachograph algorithm.

## Claims

1. A tracking tachograph comprising a microprocessor arithmetic device (8) intended for processing of information coming from sensors, a memory device (13) for storing information, a power supply (1), a display (3) for visualizing operative information, a push-button panel (5) for controlling work modes, a wheel-mounted sensor of an anti-lock brake system (21) for detecting start of vehicle movement, a printing device (6) and a first and a second I/O devices for insertion/removal of cards with an electronic chip for storing operating information accumulated during vehicle movement and identifying an operating driver, a GLONASS/GPS/GALILEO satellite navigation receiver (14), a GLONASS/GPS/GALILEO antenna (20), a connector (19) for the GLONASS / GPS / GALILEO antenna (20), a 3.3 V stabilizer (18), a GSM/GPRS modem (15), a SIM-card (12), and a GSM antenna (16), the tachograph is further provided with a first I/O port of a standard UART interface (10) to the GSM/GPRS modem and a second I/O port of a standard UART interface (11) to the satellite navigation receiver for data exchanges, and a GSM connector (17), the said microprocessor (8) receives navigation information and is synchronized with the UTC time contained in a data-exchange protocol used by the GLONASS/GPS/GALILEO satellite navigation systems, and with an accelerometer (4) as an additional information source, which is arranged on a printed-circuit board within the tracking tachograph housing, the output of an input power connector (2) being connected to the input of the tracking tachograph power supply (1) which power output is connected to the power inputs of the 3.3 V stabilizer (18), the power inputs of the display (3), a slot (7) of the first I/O device, a slot (9) of the second I/O device, the accelerometer (4), the GSM/GPRS modem (15), the memory device (13) and the microprocessor (8), the microprocessor (8) being connected to the accelerometer (4), to the inputs of the display (3), to the push-button panel (5), to the printing device (6), to the slot (7) of the first I/O device, to the slot (9) of the second I/O device, to the first I/O port of a standard UART interface (10), which in turn is connected to the GSM/GPRS modem (15) and, via the latter and the GSM connector (17), to the GSM antenna (16), the microprocessor (8) also connected to the second I/O port of a standard UART interface (11) loaded on the GLONASS/GPS/GALILEO satellite navigation receiver (14) module, and to the wheel-mounted sensor of the anti-lock brake system (21); and a power output of the 3.3 V stabilizer (18) is connected to the power input of the GLONASS/GPS/GALILEO satellite navigation receiver (14) and, via the GLONASS/GPS/GALILEO connector (19), supplies power to the GLONASS/GPS/GALILEO antenna (20).

## Patentansprüche

1. Tracking-Tachograph mit einer mikroprozessorgesteuerten arithmetischen Vorrichtung (8), die zur Verarbeitung von Informationen von Sensoren bestimmt ist, einer Speichervorrichtung (13) zum Speichern von Informationen, einer Stromversorgung (1), einer Anzeige (3) zum Visualisieren von Betriebsinformationen, einer Drucktastenplatte (5) zum Steuern von Arbeitsmodi, einem radmontierten Sensor eines Antiblockierbremssystems (21) zum Erfassen des Beginns der Fahrzeugbewegung, eine Druckvorrichtung (6) und eine erste und eine zweite I/O-Vorrichtung zum Einstecken/Entfernen von Karten mit einem elektronischen Chip zum Speichern von während der Fahrzeugbewegung gesammelten Betriebsinformationen und zum Identifizieren eines Fahrers, einen GLONASS/GPS/GALILEO-Satellitennavigationsempfänger (14), eine GLONASS/GPS/GALILEO-Antenne (20), einen Anschluss (19) für die GLONASS/GPS/GALILEO-Antenne (20), einen 3,3 V-Stabilisator (18), ein GSM/GPRS-Modem (15), eine SIM-Karte (12) und eine GSM-Antenne (16), wobei der Tachograph weiterhin mit einem ersten I/O-Port einer Standard-UART-Schnittstelle (10) zum GSM/GPRS-Modem und einem zweiten I/O-Port einer Standard-UART-Schnittstelle (11) zum Satellitennavigationsempfänger für den Datenaustausch und einem GSM-Anschluss (17) versehen ist, der Mikroprozessor (8) Navigationsinformationen empfängt und mit der UTC-Zeit synchronisiert ist, die in einem Datenaustauschprotokoll enthalten ist, das von den Satellitennavigationssystemen GLONASS/GPS/GALILEO verwendet wird, und mit einem Beschleunigungssensor (4) als zusätzlicher Informationsquelle, der auf einer Leiterplatte innerhalb des Gehäuses des Tracking-Tachographen angeordnet ist, wobei der Ausgang eines Stromeingangssteckers (2) mit dem Eingang der Stromversorgung des Tracking-Tachographen (1) verbunden ist, dessen Stromausgang mit den Stromeingängen des 3,3 V-Stabilisators (18), den Stromeingängen der Anzeige (3), einem Steckplatz (7) der ersten I/O-Vorrichtung, einem Steckplatz (9) der zweiten I/O-Vorrichtung, dem Beschleunigungssensor (4), dem GSM/GPRS-Modem (15), der Speichervorrichtung (13) und dem Mikroprozessor (8) verbunden ist, wobei der Mikroprozessor (8) mit dem Beschleunigungssensor (4), den Eingängen der Anzeige (3), der Drucktastenplatte (5), der Druckvorrichtung (6) und dem Steckplatz (7) der ersten I/O-Vorrichtung, dem Steckplatz (9) der zweiten I/O-Vorrichtung, dem ersten I/O-Port einer Standard-UART-Schnittstelle (10) verbunden ist, die wiederum mit dem GSM/GPRS-Modem (15) und über letzteres und den GSM-Anschluss (17) mit der GSM-Antenne (16) verbunden ist, wobei der Mikroprozessor (8) auch mit dem zweiten I/O-Port einer Standard-UART-Schnittstelle (11) verbunden ist, die auf das Modul des GLONASS/GPS/GALILEO Satellitennavigationsempfänger (14) geladen ist, und mit dem Radsensor des Antiblockiersystems (21) verbunden ist; und ein Stromausgang des 3, 3V-Stabilisator (18) ist mit dem Stromeingang des Satellitennavigationsempfängers GLONASS/GPS/GALILEO (14) verbunden ist und über den GLONASS/GPS/GALILEO-Anschluss (19) die GLONASS/GPS/GALILEO-Antenne (20) mit Strom versorgt.

## Revendications

1. Tachygraphe de suivi comportant un dispositif arithmétique (8) à microprocesseur destiné au traitement d'informations provenant de capteurs, un dispositif (13) de mémoire servant à stocker des informations, une alimentation électrique (1), un affichage (3) servant à visualiser des informations d'exploitation, un panneau (5) à boutons-poussoirs servant à commander des modes de fonctionnement, un capteur monté sur une roue d'un système (21) de freinage antiblocage servant à détecter le début du mouvement d'un véhicule, un dispositif (6) d'impression et un premier et un deuxième dispositif d'E/S servant à l'insertion/au retrait de cartes dotées d'une puce électronique pour stocker des informations de fonctionnement accumulées pendant un mouvement du véhicule et identifier un conducteur opérant, un récepteur (14) de navigation par satellite GLONASS/GPS/GALILEO, une antenne GLONASS/GPS/GALILEO (20), un connecteur (19) pour l'antenne GLONASS/GPS/GALILEO (20), un stabilisateur 3,3 V (18), un modem GSM/GPRS (15), une carte SIM (12), et une antenne GSM (16), le tachygraphe étant en outre muni d'un premier port d'E/S d'une interface UART standard (10) vers le modem GSM/GPRS et d'un deuxième port d'E/S d'une interface UART standard (11) vers le récepteur de navigation par satellite en vue d'échanges de données, et d'un connecteur GSM (17), ledit microprocesseur (8) recevant des informations de navigation et étant synchronisé avec le temps UTC contenu dans un protocole d'échange de données utilisé par les systèmes GLONASS/GPS/GALILEO de navigation par satellite, et muni d'un accéléromètre (4) en tant que source d'information supplémentaire, qui est disposé sur une carte à circuit imprimé à l'intérieur du boîtier du tachygraphe de suivi, la sortie d'un connecteur (2) d'alimentation d'entrée étant reliée à l'entrée de l'alimentation électrique (1) du tachygraphe de suivi, ladite sortie d'alimentation étant reliée aux entrées d'alimentation du stabilisateur 3,3 V (18), aux entrées d'alimentation de l'affichage (3), à un emplacement (7) du premier dispositif d'E/S, à un emplacement (9) du deuxième dispositif d'E/S, l'accéléromètre (4), au modem GSM/GPRS (15), au dispositif (13) de mémoire et au microprocesseur (8), le microprocesseur (8) étant relié à l'accéléromètre (4), aux entrées de l'affichage (3), au panneau (5) à boutons-poussoirs, au dispositif (6) d'impression, à l'emplacement (7) du premier dispositif d'E/S, à l'emplacement (9) du deuxième dispositif d'E/S, au premier port d'E/S d'une interface UART standard (10), qui est lui-même relié au modem GSM/GPRS (15) et, via ce dernier et le connecteur GSM (17), à l'antenne GSM (16), le microprocesseur (8) étant également relié au deuxième port d'E/S d'une interface UART standard (11) chargée sur le récepteur (14) de navigation par satellite GLONASS/GPS/GALILEO module, et au capteur monté sur une roue du système (21) de freinage antiblocage ; et une sortie d'alimentation du stabilisateur 3,3 V (18) étant reliée à l'entrée d'alimentation du récepteur (14) de navigation par satellite GLONASS/GPS/GALILEO et, via le connecteur GLONASS/GPS/GALILEO (19), fournissant une alimentation à l'antenne GLONASS/GPS/GALILEO (20).
